# EUROPÄISCHE PATENTSCHRIFT

(11) **EP 2 497 169 B1**
(45) Veröffentlichungstag und Bekanntmachung des Hinweises auf die Patenterteilung: **09.08.2017**
(21) Anmeldenummer: 10771740.7
(22) Anmeldetag: 28.10.2010
(51) Int. Cl.: H02B 1/044

(54) **MONTAGEANORDNUNG FÜR ELEKTRISCHE GERÄTE**
MOUNTING ARRANGEMENT FOR ELECTRICAL DEVICES
AGENCEMENT DE MONTAGE POUR APPAREILS ÉLECTRIQUES

(30) Priorität: 05.11.2009 DE 102009044424; 17.04.2010 DE 102010015449
(43) Veröffentlichungstag der Anmeldung: 12.09.2012
(73) Patentinhaber: Weidmüller Interface GmbH & Co. KG, 32758 Detmold (DE)
(72) Erfinder: ALTHAUS, Walter, CH-4912 Aarwangen (CH); DIEKMANN, Jörg, 33813 Oerlinghausen (DE); MEIER, René, CH-8224 Löhningen (CH); MEYER, Michael, 32694 Dörentrup (DE); SCHLINGMANN, Hans, 32805 Horn (DE); HEGGEMANN, Christian, 32758 Detmold (DE)
(74) Vertreter: Specht, Peter
(86) Internationale Anmeldenummer: PCT/EP2010/066415
(87) Internationale Veröffentlichungsnummer: WO 2011/054743

(56) Entgegenhaltungen:
- DE-A1- 19 801 260
- GB-A- 1 202 036
- US-A- 5 987 203
- US-A1- 2003 223 724
- US-A1- 2006 194 473
- US-A1- 2007 293 096
- US-A1- 2009 185 336
- US-A1- 2009 221 187

## Beschreibung

Die Erfindung betrifft eine Montageanordnung nach dem Oberbegriff des Anspruchs 1, ein elektrisches Gerät für eine derartige Montagebasis und einen Schaltschrank mit einer derartigen Montagebasis.

Die gattungsgemäße US 2006/194473 A1 offenbart eine Wanddurchführungs-Klemme oder einen Wanddurchführungs-Steckverbinder mit einem Verriegelungselement zur Befestigung des aus Isolierstoff bestehenden Klemmengehäuses an einer Geräte- oder Gehäusewand, wobei dieses zusammen mit dem Verriegelungselement in einer Öffnung einer metallischen Geräte- oder Gehäusewand einsteckbar ist und mit einem schwenkbaren Betätigungskeil in der Geräte- oder Gehäusewand-Öffnung klemmend befestigt wird.

Zum technologischen Hintergrund wird noch die US 5,987,203 genannt.

Bei bekannten Schaltschränken werden die anreihbaren elektrischen Geräte wie beispielsweise Reihenklemmen oder sonstige Komponenten und Geräte in der Regel auf Tragschienen montiert, die auf einer Schaltschrankrückwand oder einer im Schaltschrank angeordneten Platte montiert sind.

Wird die Schaltschranktür geöffnet, blickt man frontal auf die auf der oder den Tragschienen montierten Geräte und deren Verdrahtung. Die Geräte - beispielsweise die genannten Reihenklemmen - weisen wenigstens einen oder in der Regel zwei oder mehr Leiteranschlüsse zum Anschluss externer elektrischer Leiter auf. Da die Geräte ferner unterschiedlichste Abmessungen haben können und die Leiteranschlüsse je nach Gerät und dessen Auslegung an verschiedensten Stellen der Geräte angeordnet sind, ist eine automatisierte Verdrahtung der Montagbasis mit den darauf angebrachten elektrischen Geräten nicht oder nur sehr eingeschränkt möglich. Zwar gibt es Versuche, einen Teil der Verdrahtung aus der Ebene der Leiteranschlüsse heraus hinter die Tragschiene und darauf befestigte Komponenten zu verlegen. Auch diese Art der Verdrahtung ist aber nach wie vor nicht genügend übersichtlich und nicht für eine automatisierte Montage geeignet.

Die Erfindung hat die Aufgabe, dieses Problem zu beheben.

Die Erfindung löst diese Aufgabe durch den Gegenstand des Anspruchs 1. Sie schafft ferner die Gegenstände der Ansprüche 1, 10 und 11.

Vorteilhafte Ausgestaltungen der Erfindung sind den Unteransprüchen zu entnehmen.

Die Erfindung eignet sich insbesondere für anreihbare Geräte, aber auch für elektrische Geräte, die nicht anreihbar sind, wie Netzgeräte SPS-Einheiten und dgl..

Die Verdrahtungsseite betrifft insbesondere die "Steuerverdrahtung" der elektrischen Geräte auf der "Rückseite" der Montageplatte. Andere Funktionen, vorzugsweise alle anderen Funktionen wie eine Leistungsversorgung, Signaleingänge usw., bleiben vorzugsweise auf der "Vorderseite".

Da die Schaltschrankkomponenten wie z.B. die Reihenklemmen die Montageplatte durchsetzen oder zumindest von der gegenüberliegenden Seite der Öffnung aus zugänglich sind, kann auf der der Verdrahtungsseite gegenüber liegenden Seite der Geräte anders als auf der weitgehend oder ganz einheitlich ausgestalteten Verdrahtungsseite den individuellen Aufgaben der Geräte insbesondere durch verschiedene Abmessungen Rechnung getragen werden, ohne dass dies den Vorgang des Verdrahtens - also des Anschließens der Leiter - auf der Verdrahtungsseite erschweren oder beeinträchtigen kann.

Die separate Verdrahtungsseite der Montageplatte erlaubt es dagegen, die Geräte, insbesondere Reihenklemmen, optimal an die Aufgabe der Verdrahtung anzupassen, wobei sich insbesondere eine einheitliche Auslegung und örtliche Anordnung der Anschlüsse als vorteilhaft erweisen. Die erfindungsgemäße Montageanordnung mit anreihbaren Gehäuse vereinfacht insbesondere die Verdrahtung von Schaltschränken. Da auf der einen Seite der Montageplatte die "schaltschrankinterne Verdrahtungsseite" ausgebildet wird, kann diese optimal an die Aufgabe der Verdrahtung angepasst werden.

Wird eine Reihenklemme beispielsweise als Durchgangsklemme ausgebildet, nimmt der Frontabschnitt vorzugsweise eine Stromschiene auf, welche die Leiteranschlüsse leitend miteinander verbindet. Die Leiteranschlüsse sind dagegen ausschließlich von der Verdrahtungsseite aus zugänglich.

Ist dagegen ein Funktionsmodul an der Reihenklemme anzuordnen, beispielsweise ein Trennmodul oder ein Sicherungs- oder Relaismodul, können die Elemente zur Realisierung dieser Funktion am Frontabschnitt angeordnet werden, ohne dass die Funktionsart des Gerätes die Position der Leiteranschlüsse beeinflusst.

Es ist insbesondere denkbar, sämtliche Leiteranschlüsse für eine vollautomatisierte Robotermontage auszulegen. Eine solche Robotermontage wird dann besonders einfach, wenn sämtliche der Leiteranschlüsse auf der internen Verdrahtungsseite senkrecht zur Ebene der Montageplatte in einer einheitlichen Höhe (Z-Koordinate) liegen. Ergänzend ist es denkbar, die Leiteranschlüsse in X-/Y-Richtung parallel zur Montageplatte in einem festen Raster anzuordnen. Diese Ausgestaltung ist vorteilhaft, nicht aber zwingend erforderlich.

Der Begriff der Montageplatte ist im Rahmen dieser Anmeldung nicht zu eng zu fassen. Es kann sich um eine einstückige Platte handeln, welche Öffnungen aufweist, die beispielsweise in diese eingeschnitten wurden, aber auch um eine Montageplatte, die aus mehreren Stücken besteht, z.B. aus Streifen, insbesondere Metallblechstreifen, welche voneinander beabstandet auf seitlichen Stegen befestigt sind, so dass die erfindungsgemäßen Geräte in die Zwischenräume zwischen diesen Stegen einsetzbar sind. Die Montageplatte ist somit mehr eine Art Montagebasis, welche Durchgangsöffnungen zum Anbringen der "Reihenklemmen" und dgl. aufweist.

Nachfolgend wird die Erfindung unter Bezug auf die Zeichnung anhand von Ausführungsbeispielen näher beschrieben. Es zeigt:
- Fig. 1 a - c: eine perspektivische Ansicht, eine Draufsicht und eine Seitenansicht einer Montagebasis mit darauf angeordneten elektrischen Geräten;
- Fig. 2: eine perspektivische Ansicht einer weiteren Montagebasis mit darauf angeordneten elektrischen Geräten;
- Fig. 3: eine perspektivische Rückansicht der Anordnung aus Fig. 2; und
- Fig. 4 a bis c bis Fig. 8 a bis c: jeweils eine Seitenansicht und verschiedene perspektivische Ansichten von Reihenklemmen für eine Montagebasis, beispielsweise nach Art der Fig. 2; und
- Fig. 9a, b - 11 a, b: jeweils eine perspektivische Ansicht und eine Schnittansicht verschiedener Montageadapter an Montageplatten, teilweise mit darauf aufgesetzten elektrischen Geräten.

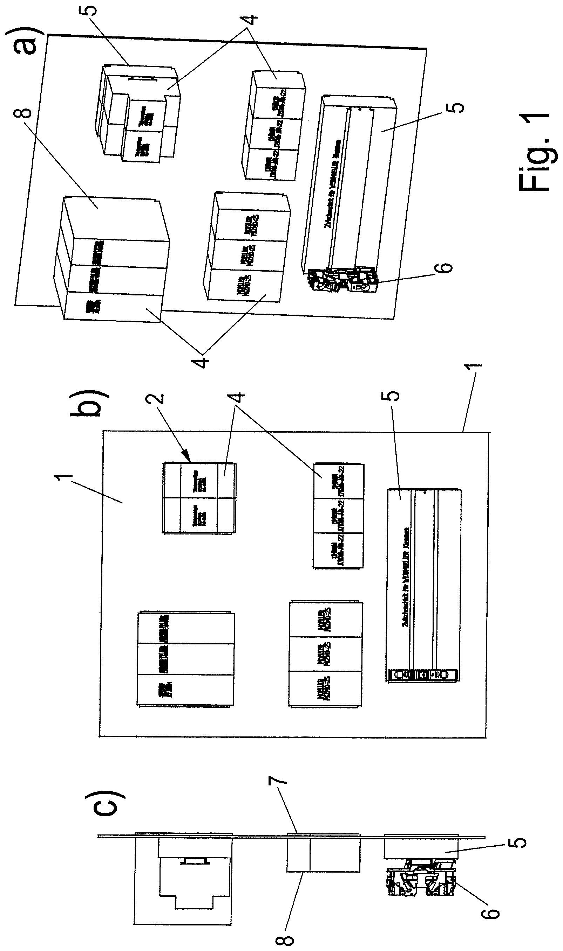

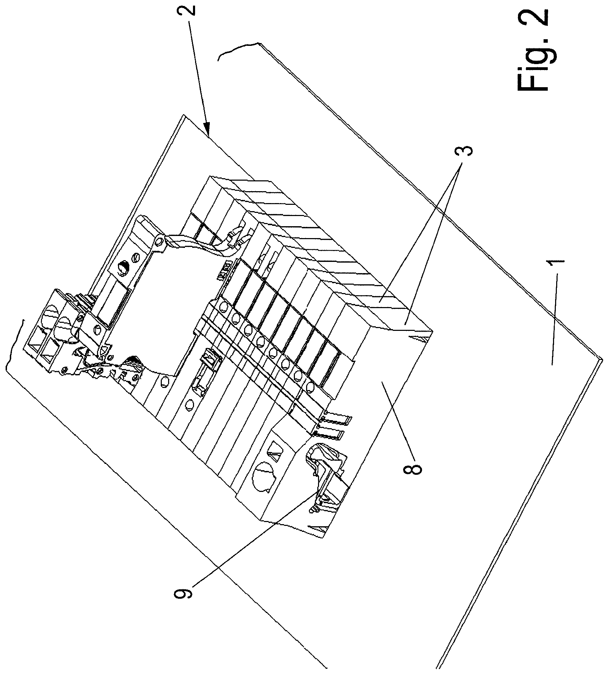

Figur 1 zeigt verschiedene Ansichten einer Montagebasis, die als Montageplatte 1 ausgebildet ist, wobei die Montageblatte 1 Öffnungen 2 (siehe auch Figur 2) aufweist, welche die Montageplatte 1 durchsetzen.

Die Öffnungen 2 dienen zur vorzugsweise rastenden Aufnahme von elektrischen Geräten wie Reihenklemmen 3 (siehe auch Figur 2) oder Elektronikgehäusen 4. Die elektrischen Geräte können auch einen mit einer hier nicht dargestellten oder nicht sichtbaren Verdrahtung versehenen Montagesockel 5 (Figur 1c) umfassen, auf welchen wiederum anreihbare elektrische Geräte wie Komponenten (z.B. auf Tragschienen aufsetzbare Reihenklemmen 6) angeordnet sind.

Die elektrischen Geräte 3, 4 und/oder die Montagesockel 5 sind derart ausgebildet, dass sie die Öffnungen 2 der Montageplatte 1 mit einem Verdrahtungsabschnitt 7 durchsetzen, wohingegen auf der mit dem Verdrahtungsabschnitt 7 gegenüberliegenden Seite der Montageplatte 1 ein Frontabschnitt 8 aus der Öffnung 2 vorsteht. Wesentlich ist, dass der Verdrahtungsabschnitt 7 derart ausgestaltet ist, dass er von der gegenüber liegenden Seite der Montageplatte aus zugänglich ist. Vorzugsweise durchsetzt er dazu die Öffnung 2 oder er erstreckt sich jedenfalls bis in den Bereich dieser Öffnung oder nahe vor die Öffnung derart, dass er von der Verdrahtungsseite aus beschaltbar ist.

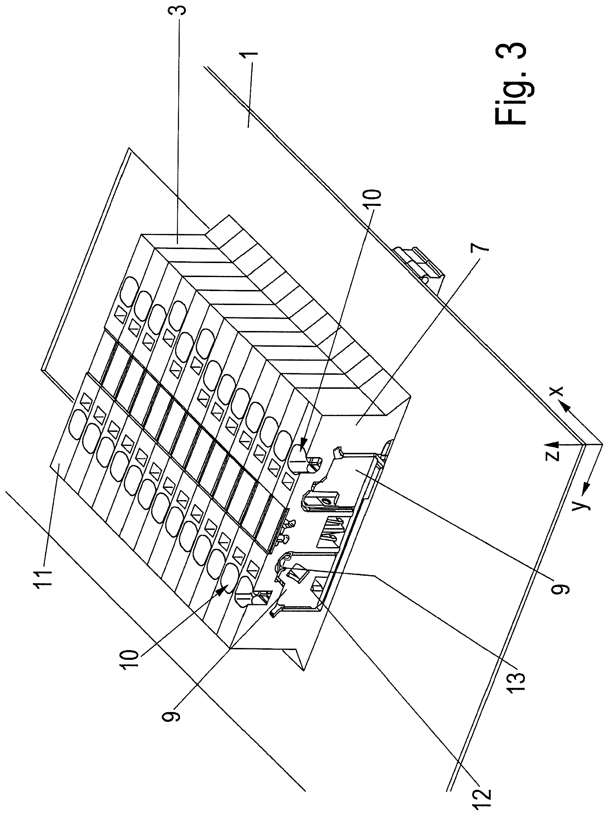

Figur 2 zeigt eine Draufsicht auf eine mögliche Variante einer "Vorderseite" einer Montageplatte mit einer Reihung von Reihenklemmen 3, von denen jeweils der Frontabschnitt 8 zu sehen ist. Figur 3 zeigt hingegen die "Rückseite" dieser Montageplatte mit den Verdrahtungsabschnitten 7 der Reihenklemmen 3.

Die Begriffe "Vorderseite" und "Rückseite" sind in diesem Zusammenhang nicht einschränkend zu verstehen. Sie beziehen sich vielmehr auf eine Anordnung der Montageplatte 1 in einem Schaltschrank, bei welcher die "Vorderseite" bzw. Frontseite derart ausgerichtet ist, dass sie beim Öffnen der Schaltschranktür zu sehen ist, wohingegen die Rückseite mit den Verdrahtungsabschnitten 7 auf der vom Betrachter abgewandten Seite liegt. Vorzugsweise wird die Montageplatte 1 beweglich, insbesondere an einem, oder mehreren Scharnieren schwenkbar im Schaltschrank angebracht. Nach dem Öffnen des Schaltschrankes kann die Montageplatte 1 dann so gedreht werden, dass die Verdrahtungsabschnitte 7 der Reihenklemmen 3 oder sonstigen anreihbaren Elektronikgehäuse 4 sichtbar sind.

Auf diese Weise wird eine "Verdrahtungsseite" im Schaltschrank/an der Montagebasis ausgebildet, die vorzugsweise auf der beim Öffnen der Schaltschranktür zunächst nicht sichtbaren "Rückseite" der Montageplatte 1 in einem Schaltschrank liegt.

Diese "Verdrahtungsseite" ist derart ausgelegt, dass ihre Leiteranschlüsse 9 vorzugsweise in einem XYZ-Koordinatensystem in XY-Richtung in einem festen Raster liegen und vorzugsweise auch in Z-Richtung in einem festen Raster. Insbesondere liegen sie in Z-Richtung nur auf einer einzigen Höhe.

Die Leiteranschlüsse 9 umfassen hier Leitereinführ-Öffnungen 10 in Gehäusen 11 der Reihenklemmen, durch welche die Leiter in die Leiteranschlüsse 9 eingesteckt werden können, um die Leiteranschlüsse 9 zu kontaktieren. Diese Leiteranschlüsse sind in Direktstecktechnik ausgebildet, auch Push-in-Anschlüsse genannt.

Vorzugsweise werden allerdings die bereits genannten Direktsteckleiteranschlüsse in Push-in-Technik realisiert. Diese Push-in-Leiteranschlüsse weisen in der Regel einen Klemmkäfig 12 auf sowie eine im Klemmkäfig angeordnete Klemmfeder 13, wobei die Klemmfeder 13 derart federnd ausgelegt ist, dass es möglich ist, vorzugsweise direkt durch Einstecken des Leiters oder ebenfalls durch ein Hilfselement wie einen Schraubendreher oder den Leiteranschluss 9 zu öffnen und den Leiter in den Leiteranschluss 9 einzustecken.

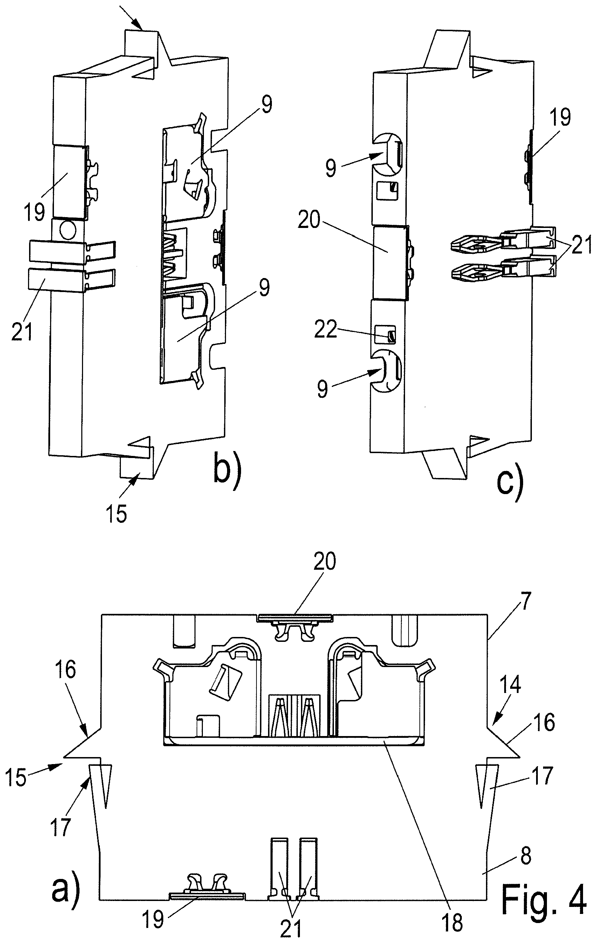

Insbesondere wenn auf der Verdrahtungsseite bzw. auf der Rückseite der Montageplatte 1 vorzugsweise sämtliche Leiteranschlüsse in einem festen XYZ-Raster ausgerichtet sind, ist es möglich, die Verdrahtung automatisiert beispielsweise mit einem Montageroboter durchzuführen. Dies ist aber nicht zwingend, denn die erfinderische Ausgestaltung bietet auch einer Verdrahtung von Hand erhebliche Vorteile, da es sehr einfach ist, die einzelnen Leiteranschlüsse 9 zu erkennen und die entsprechenden Leiter in sie einzuführen. Die Gehäuse der Reihenklemmen sind mit Befestigungsvorrichtungen 14, 15 versehen (siehe beispielsweise Figur 4). Bei den Befestigungsvorrichtungen 14, 15 handelt es sich vorzugsweise um Rastvorrichtungen, die aus einem Auflager/Widerlager 16 und einem nachgiebigen Raststeg 17 bestehen bzw. diese Elemente aufweisen. Dabei sind die Raststege 17 der Befestigungsvorrichtung 14, 15 derart ausgelegt, dass sie beim Durchstecken der Reihenklemmen 3 oder analoger Einrichtungen bzw. Geräte durch die Öffnungen 2 ausweichen, woraufhin die Ränder der Öffnung 2 im Zwischenraum zwischen dem Widerlager 16 und den Raststegen 17 zum Liegen kommen, wodurch der Raststeg 17 zurückfedern kann und die Montageplatte zwischen dem Raststeg 17 und dem Widerlager 16 arretiert wird, so dass die Reihenklemme 3 an der Montageplatte 1 mit der Öffnung 2 befestigt ist.

Vorzugsweise liegen erfindungsgemäß sämtliche oder nahezu sämtliche Leiteranschlüsse auf der internen Verdrahtungsseite 7.

Diese Ausgestaltung macht neue Bauformen von Komponenten und Geräte, beispielsweise, Reihenklemmen möglich.

Beispielsweise wird nach Fig. 4 eine Durchgangsreihenklemme realisiert, an der zwei Push-in-Anschlüsse auf der Verdrahtungsseite 7 zugänglich sind, wobei die Push-in-Anschlüsse über eine Stromschiene 18 leitend miteinander verbunden sind.

Derart ist es möglich, die gesamte interne Verdrahtung eines Schaltschrankes (oder jedenfalls den überwiegenden Teil der Verdrahtung des Schaltschrankes) auf der Verdrahtungsseite 7 bzw. der Rückseite der Montageplatte durchzuführen, wohingegen das eigentliche Gehäuse der Reihenklemmen 3 oder Elektronikgehäuse jeweils mit dem Frontabschnitt 8 die Montageplatte durchsetzt, so dass es auf der Vorderseite der Montageplatte 1 beim Öffnen des Schaltschrankes zu sehen ist. Dies bringt nicht nur den Vorteil einer vereinfachten Montage mit sich sondern auch den Vorteil einer besonders übersichtlichten, "aufgeräumt" wirkenden Gestaltung des gesamten Schaltschrankinnenraums, welche auch die Wartung und Prüfung deutlich vereinfacht. Die optimierte Montageanordnung vereinfacht derart nicht nur die Montage sondern senkt auch die Betriebskosten. Dies gilt umso mehr, als durch die optimierte Schaltschrankgestaltung auch die Fehleranfälligkeit verringert wird, denn Fehlbeschaltungen werden aufgrund automatisierter Verdrahtung mit hoher Wahrscheinlichkeit vermieden.

Es ist ergänzend vorteilhaft möglich, Markierer 19, 20 sowohl auf der Verdrahtungsseite 7, also am Verdrahtungsabschnitt 7, der Gehäuse 11 vorzusehen als auch am Frontabschnitt 8, der auf der Vorderseite der Montageplatte 1 zu sehen ist. Derart können die installierten Geräte von beiden Seiten der Montageplatte her identifiziert werden (Fig. 4).

Es ist auch denkbar, Querverbinder 21 auf einer oder beiden Seiten der Geräte vorzusehen bzw. anzuordnen. Vorzugsweise sind die Querverbinder 21 auf der Vorderseite der Montageplatte im Frontabschnitt 8 angeordnet. Figur 4 zeigt beispielhaft derartige Querverbinder 21, die am Frontabschnitt angeordnet sind und vom Frontabschnitt 8 aus zugänglich sind.

Es ist ferner denkbar, die Push-in-Anschlüsse, d. h. die Leiteranschlüsse 9, derart auszubilden, dass ein Öffnen der Leiteranschlüsse nur mit einem Werkzeug oder einem Betätigungsdrücker möglich ist. Im vorliegenden Fall sind Öffnungen 22 in den Gehäusen 11 der Reihenklemmen 3 ausgebildet, die im Verdrahtungsabschnitt 7 liegen und in die Schraubendreher oder dergleichen einsteckbar sind, um die Leiteranschlüsse 9 zu öffnen.

Wie bereits ausgeführt, liegen vorzugsweise sämtliche interne Leiteranschlüsse im Verdrahtungsabschnitt 7 auf der Rückseite der Montageplatte 1 auf.

Diese Ausgestaltung ist allerdings nicht zwingend.

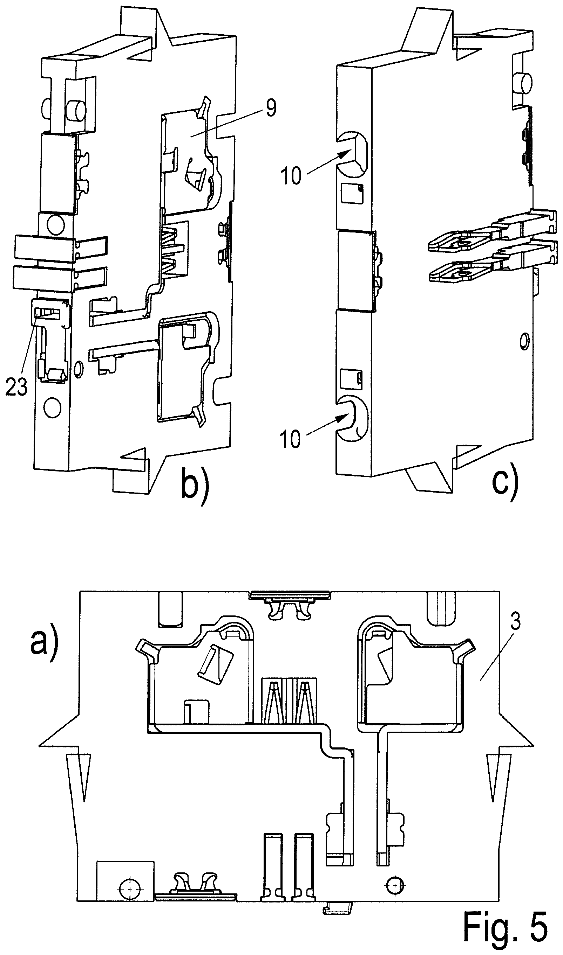

Es ist insbesondere denkbar, dass auch einer oder mehrere Leiteranschlüsse, steckbare Anschlüsse, insbesondere für externe Anschlüsse auf der Vorderseite der Montageplatte im Frontabschnitt 8 liegen. Eine derartige Reihenklemme zeigt Figur 5. Anstelle der Durchgangsstromschiene 18 ist hier eine Stromschiene auch in einem Anschlussbereich 23 im Frontabschnitt 8 zugänglich.

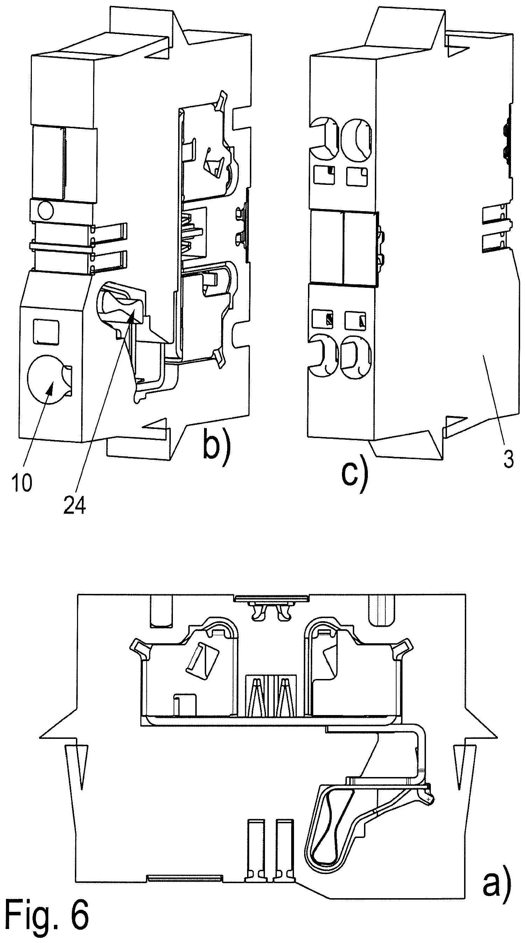

Es ist ferner auch denkbar, einen oder mehrere Leiteranschlüsse 24 vorzusehen die von dem Frontabschnitt 8 auf der Vorderseite der Montageplatte 1 aus zugänglich sind. Eine derartige Ausgestaltung zeigt Figur 6. Derartige weitere Leiteranschlüsse 24 eignen sich insbesondere zum Anschluss eines Leiters mit einem sehr großen Durchmesser, beispielsweise um eine Einspeiseklemme zur Energieversorgung zu realisieren.

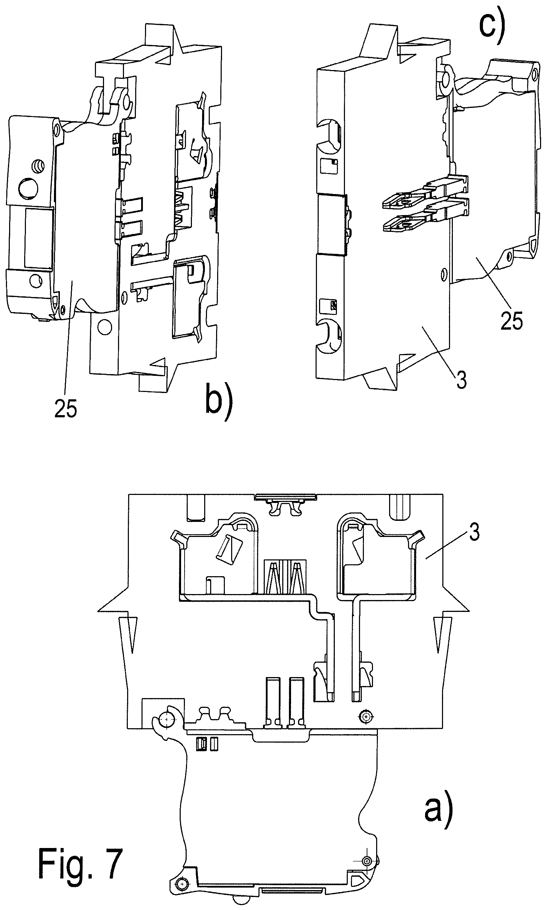

Wie in Figur 7 dargestellt, können an der Reihenklemme auch Module oder dergleichen angeordnet sein. Figur 7 zeigt beispielsweise eine Reihenklemme mit einem schwenkbaren Modul 25 am Frontabschnitt 8. Dieses Modul 25 kann eine Sicherung und ein Relais oder dergleichen aufnehmen. Derart wird die eigentliche Verdrahtungsseite 7 von der Relais-Sockelseite sauber getrennt, was wiederum die Verdrahtung auf der Verdrahtungsseite deutlich vereinfacht.

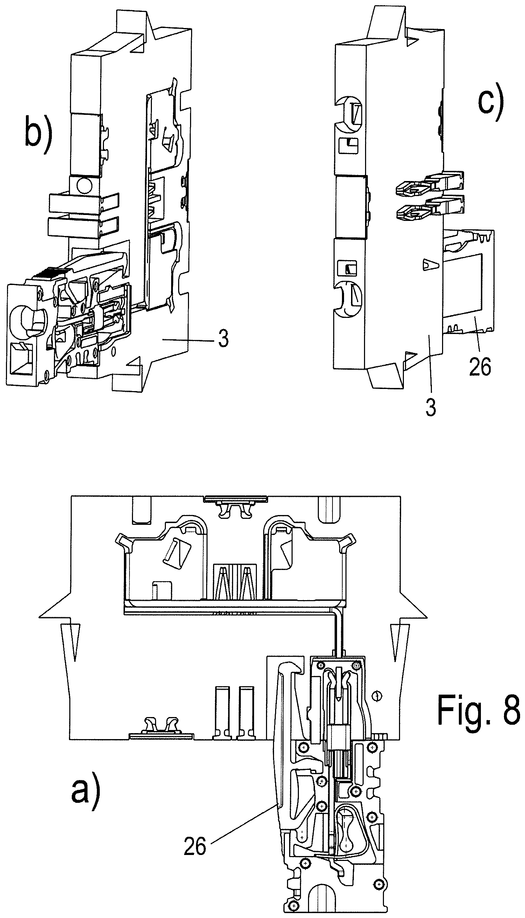

Anstelle des schwenkbaren Moduls 24 kann auch ein Modul anderer Art an der Reihenklemme im Frontabschnitt 8 angeordnet werden. Figur 8 zeigt beispielsweise ein Prüfsteckermodul 25, welches an den Frontabschnitt 8 auf der Vorderseite der Montageplatte angesetzt ist.

Vorzugsweise sind die Öffnungen 2 in der Montageplatte 1 Durchgangsöffnungen 2 mit rechteckiger Formgebung, da dies das Anreihen von den Gehäusen der elektrischen Geräte vereinfacht. Sämtliche Öffnungen 2 können einheitliche Abmessungen aufweisen.

Es ist alternativ auch denkbar, Öffnungen 2 verschiedener Größe vorzusehen, beispielsweise um elektrische Geräte mit verschieden großen Abmessungen an der Montageplatte 1 anzubringen.

Wie bereits ausgeführt, kann es sich bei den elektrischen Geräten einerseits um Reihenklemmen handeln, die direkt aneinanderreihbar sind. Die Geräte können aber auch als Elektronikgehäuse 4 derart ausgebildet sein, dass jeweils auf der Verdrahtungsseite im montierten Zustand ein Verdrahtungsabschnitt 7 vorgesehen ist, der die Leiteranschlüsse aufweist, wobei das Elektronikgehäuse mit einem weitgehend beliebig gestalteten Frontabschnitt 8 die Montageplatte 1 durchsetzt.

Es ist ferner nach Fig. 1 auch denkbar, die bereits erwähnten Modulsockel 5 mit Leiteranschlüssen vorzusehen, die einen Verdrahtungsabschnitt 7 und die Öffnung durchsetzen, wobei sie dann auf der im Verdrahtungsabschnitt 7 gegenüberliegenden Seite ein Frontabschnitt 8 aufweisen, der es ermöglicht, entweder direkt wiederum anreihbare elektrische Geräte herkömmliche Art wie herkömmliche Reihenklemmen 6 aufzunehmen oder der eine Tragschiene aufweist, auf der herkömmliche auf Tragschienen befestigbare Reihenklemmen angeordnet werden können.

Es ist zudem denkbar, vorkonfektionierte Leiter für die Verdrahtung zu verwenden, so dass eine Verdrahtung auch direkt vom Roboter möglich ist. Dieser Roboter kann ggf. auch zum Montieren und/oder Beschriften der Geräte an der Montageplatte 1 genutzt werden.

Um die Verdrahtung zu vereinfachen und um zu verhindern, dass einzelne der Öffnungen 10 in den Gehäusen 11 von Leitern verdeckt werden, kann ein Verdrahtungsplan beispielsweise von einem entsprechenden Computerprogramm erstellt werden.

Vorzugsweise werden die Leitungen der Verdrahtung dazu auf der Rückseite derart verlegt, dass keine der Öffnungen 10 verdeckt ist.

Hierzu bietet es sich beispielsweise an, die Leitungen im XY-Raster parallel zur X-bzw. parallel zur Y-Streckung zu verlegen und auf der Montageplatte 1 Bereiche vorzusehen, die als bevorzugte "Verlegebereiche" bzw. "Verlegewege" für die Verdrahtung genutzt werden.

Es ist auch denkbar - nicht aber zwingend erforderlich - Mittel an der Montageplatte anzuordnen, welche das Verdrahten vereinfachen. So können schienenartige Aufnahmebereiche für die Leitungen vorgesehen sein, beispielsweise Aufnahmereusen, in welche die Leiter in einem mittleren Bereich zwischen zwei Anschlüssen z.B. von einem Roboter eingefädelt werden (hier nicht dargestellt) können, aus denen sich die Leiter aber nicht selbsttätig wieder lösen können.

Es ist zudem denkbar, an den Geräten mit den Leiteranschlüssen 9 vorzugsweise in der Nähe dieser Leiteranschlüsse Zugentlastungsmittel vorzusehen, in welche die Leiter, welche in die Leiteranschlüsse eingesteckt worden sind, eingreifen (z.B. eingeklemmt werden).

Die erfindungsgemäße Verdrahtung kann nicht nur einfach und schnell erfolgen, sondern sie führt auch zu einer niedrigeren Fehlerquote beim Verdrahten, da sowohl von Hand als auch per Roboter aufgrund der übersichtlichen Auslegung der Verdrahtungsseite Fehler mit einer höheren Wahrscheinlichkeit vermieden werden.

Die Lösung ist auch in thermischer Hinsicht vorteilhaft, da die Wärmeentwicklung mehr auf die beiden Seiten der Montageplatte verteilt wird.

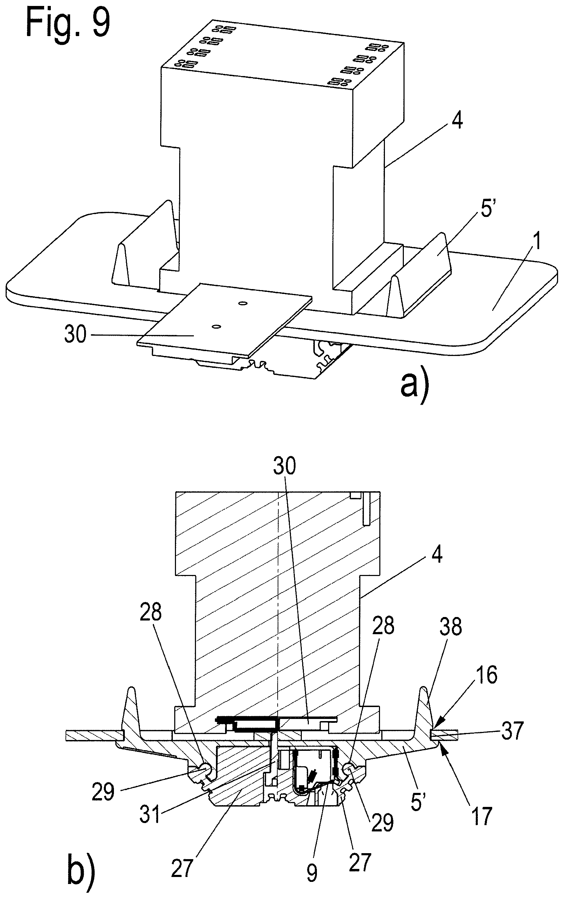

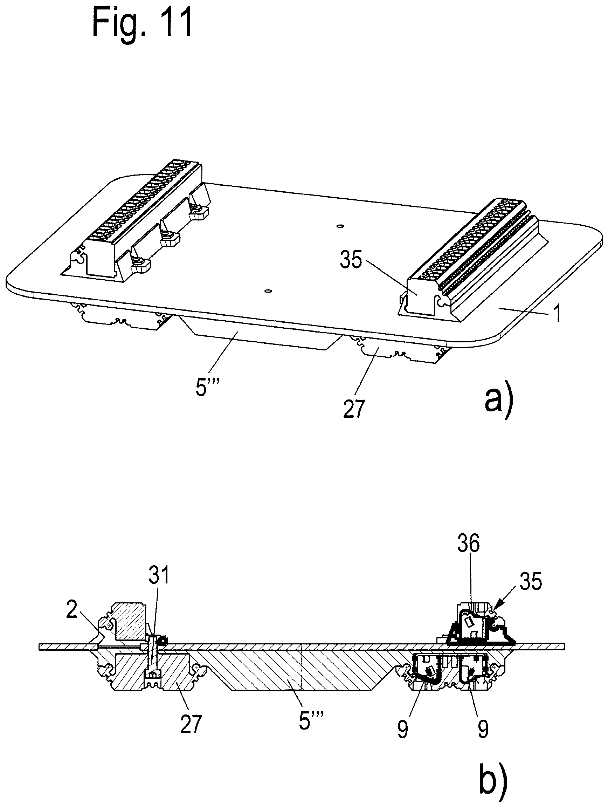

Fig. 9 - 11 zeigen weitere Varianten von Montagesockeln und -Adaptern.

Die Öffnungen 2 dienen wiederum zur vorzugsweise rastenden Halterung der Montagesockel 5, 5', 5", 5"', auf welchen wiederum anreihbare elektrische Geräte 4 angeordnet werden können.

Wie in Fig. 9 zu erkennen, ist der Montagesockel 5' wiederum derart ausgebildet, dass er eine der Öffnungen 2 der Montageplatte 1 durchsetzt.

Der Verdrahtungsabschnitt kann einstückig mit dem Montagesockel ausgebildet sein, oder, wie in Fig. 9b zu erkennen, als ein separates Anschlussteil 27, welches an den eigentlichen Montagesockel 5' ansetzbar, beispielsweise an korrespondierenden Rastmitteln 28, 29 anrastbar ist. Der Montagesockel 5' weist zudem wiederum Rastmittel 16, 17 an zwei voneinander abgewandten Außenseiten auf, die zum Verrasten in der Öffnung 2 an den Rändern der Öffnung 2 der Montageplatte 2 dienen. Hier sind diese Rastmittel die Kanten einer Nut 37 in einem federnden Steg 38, welcher derart angeschrägt ist, dass er beim Einsetzen des Montagesockels in die Öffnung 2 federnd nachgibt, wobei die Nut über den Rand der Öffnung 2 schnappt, wenn sie in den Bereich der Montageplatte 1 gelangt.

In dem separaten Anschlussteil 27 sind dann der Verdrahtungsabschnitt und hier auch - beispielhaft - vollständig der oder die Leiteranschlüsse 9 ausgebildet.

Die Verdrahtungsseite ist hier in Fig. 9 die "untere" Seite der Montageplatte 1.

Damit ist es hervorragend möglich, elektrische Geräte 4 verschiedener Art in das neue System zu integrieren.

Der Montagesockel 5' weist nach Fig. 9 ein als Profil 30 ausgebildetes Adapterteil an seiner zur Öffnung weisen Seite auf, welches beispielhaft tragschienenartig ausgebildet ist, so dass ein auf eine Tragschiene aufrastbares Gerät auf dieses Profil aufgerastet werden kann. Das Profil kann einstückig mit dem Montagesockel 5' ausgebildet sein oder daran zu befestigen sein, was hier mit einer Schraube 31 erfolgt.

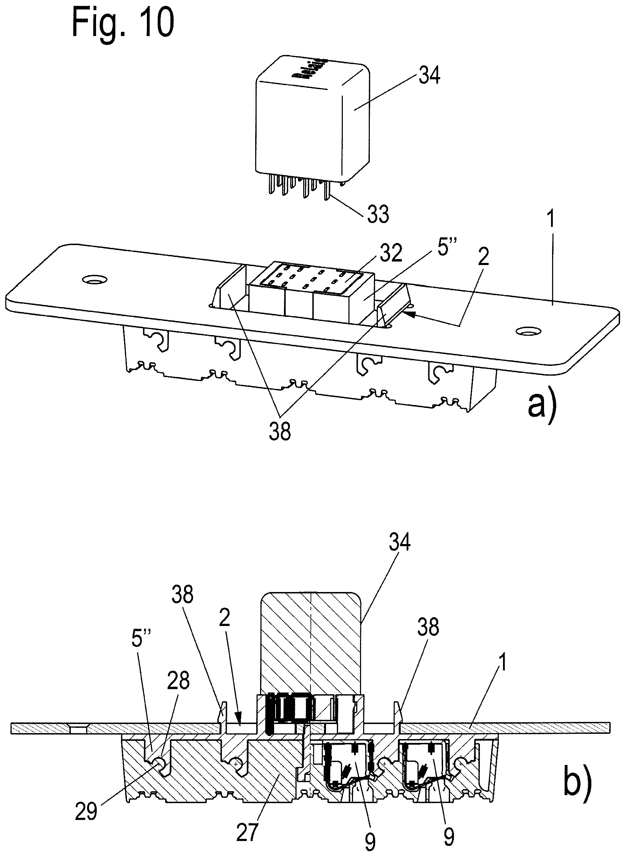

Fig. 10 zeigt eine Variante eines Montagesockels 5", der im Unterschied zu Fig. 9 ein Anschlussteil 27' aufweist, in welchem senkrecht zur Anreihrichtung (hier also senkrecht zur Blattebene) beispielhaft mehr als zwei - hier vier - der Leiteranschlüsse 9 angeordnet sind.

An der zur Öffnung weisen Seite ist auf dem Montagesockel 5" ein Adapterteil 32 befestigt (hier wieder mit einer Schraube 31), welches hier derart ausgebildet ist, dass es ein Steckgesicht aufweist, in welches Stifte 33 eines als Relaisbaustein 34 ausgebildeten Geräts einsteckbar sind. Anstelle eines Relaisbausteins kann auch ein anderes Gerät mit einem passenden Teckgesicht aufgesteckt werden.

Nach Fig. 4 wird ein Montagesockel 5"'b geschaffen, auf welchen auf der von der Verdrahtungsseite abgewandten Seite eine Anschlussleiste 35 mit Leiteranschlüssen 36 (hier auch in Push-In-Technik) aufgesteckt ist, welche vorteilhaft "universell" dazu genutzt werden kann, Stecker oder Leiter oder sonstige Geräte verschiedenster Art aufzustecken (z.B. Steuerungen, Schütze, Spannungswandler, Relais usw.).

Es ist eine Übertragung von PoSiDa -Signalen (Power, Signal, Daten) von der Anschluss- zur Verdrahtungsseite möglich und umgekehrt und eine Kommunikation von Montagesockel zu Montagesockel.

Dabei ist der Montagesockel 5'" vorzugsweise derart ausgebildet, dass er in zwei benachbarte Öffnungen 2 eingreift und dort oder direkt an der Montageplatte befestigt ist, was eine besonders vorteilhaft stabile Ausgestaltung realisiert.

Es sind Bausteine / Geräte verschiedenster Art möglich: DU, PE, TR, SI. Potentialverteilung, Initiatoren, Aktoren.

Zur Vereinfachung einer Robotermontage können Referenzpunkte 39 (Fig. 7a) an der Montageplatte und/oder an den Geräten oder Montagesockeln vorgesehen sein. Es ist dann durch Sensierung dieser Referenzpunkte möglich, die absolute Lage eines Geräts an einer Montageplatte weitgehend toleranzfrei zu bestimmen, um eine exakte Verdrahtung realisieren zu können. Als Referenzpunkte könnten auch Markiereraufnahmen oder dgl. an der Reihenklemme genutzt werden.

Es ist auch denkbar, Kennzeichnungen verschiedener Art an den Geräten und Montagesockeln vorzusehen.

Die Leiter können zur Vereinfachung einer robotermontage ultrallschallverdichtet mit Crimpanschluss ausgebildet sein, um eine genügende Steifigkeit der Leiterenden zu gewährleisten, so, um sie einfach in Push-In-Anschlüsse eizuführen. Es können auf Stifte oder dgl. am Roboter zum Öffnen von Push-In-Anschlüssen genutzt werden.

Vorzugsweise sind die Leiteranschlüsse 9 in der X-Y-Ebene parallel zur Montagewand in einem festen Raster angeordnet bzw. anzuordnen. In der Richtung senkrecht dazu (Z-Richtung) wiesen sie vorzugsweise einen festen gleichen Abstand zur Montagewand 1 auf.

In Hinsicht auf die vorstehende Beschreibung bevorzugter Ausführungsbeispiele sei angemerkt, dass nachfolgend einige bevorzugte Ausgestaltungen auch im Detail beschrieben werden, dass die Erfindung aber nicht auf diese Ausgestaltungen beschränkt ist sondern im Rahmen der Ansprüche beliebig variiert ausgestaltet werden kann. Insbesondere sind Begriffe wie "oben", "unten", "vorne" oder "hinten" nicht einschränkend zu verstehen sondern beziehen sich lediglich auf die jeweils dargestellte Anordnung. Zudem sind, wenn einzelne Bestandteile erläutert werden, diese - wenn nicht anders erwähnt - grundsätzlich auch in mehrfacher Ausgestaltung denkbar. Unter den Schutzbereich fallen zudem auch funktionale Umkehrungen der dargestellten Anordnungen und Verfahren sowie äquivalente Ausgestaltungen.

**Bezugszeichen**

| | |
|---|---|
| Montageplatte | 1 |
| Öffnungen | 2 |
| Reihenklemmen | 3 |
| Elektronikgehäusen | 4 |
| Montagesockel | 5, 5', 5", 5"' |
| Reihenklemmen | 6 |
| Verdrahtungsabschnitt | 7 |
| Frontabschnitt | 8 |
| Leiteranschlüsse | 9 |
| Öffnungen | 10 |
| Gehäuse | 11 |
| Klemmkäfig | 12 |
| Klemmfeder | 13 |
| Befestigungsvorrichtungen | 14, 15 |
| Auflager | 16 |
| Raststeg | 17 |
| Stromschiene | 18 |
| Markierer | 19, 20 |
| Querverbinder | 21 |
| Öffnungen | 22 |
| Anschlußbereich | 23 |
| Leiteranschlüsse | 24 |
| Modul | 25 |
| Prüfsteckermodul | 26 |
| Anschlußteil | 27 |
| Rastmitteln | 28, 29 |
| Adapterteil | 32 |
| Schraube | 31 |
| Stifte | 33 |
| Relaisbaustein | 34 |
| Anschlussleiste | 35 |
| Leiteranschlüsse | 36 |
| Nut | 37 |
| Steg | 38 |

## Patentansprüche

1. Montageanordnung, insbesondere für einen Schaltschrank, mit einer ein- oder mehrstückigen Montageplatte (1) zur Aufnahme anreihbarer elektrischer Geräte, insbesondere zur Aufnahme von Reihenklemmen oder von Elektronikgehäusen, wobei
a) die Montageplatte (1) wenigstens eine oder mehrere die Montageplatte (1) durchsetzende Öffnungen (2) aufweist,
b) Gehäuse (11) der elektrischen Geräte und/oder von einem oder mehreren Montagesockeln (5) die Montageplatte durchsetzen,
c) die Gehäuse wenigstens einen oder mehrere Leiteranschlüsse (9) zum Anschluss elektrischer Leiter aufweisen
d) wobei die Gehäuse mit einem Frontabschnitt (8) durch die Öffnung auf die andere Seite der Montageplatte (1) vorstehen,
e) die Geräte, vorzugsweise die Reihenklemmen, Befestigungsvorrichtungen (14, 15) aufweisen, mit welchen die Geräte, vorzugsweise die Reihenklemmen an den Montageplatten festgelegt sind,
f) wobei die Befestigungsvorrichtungen (14, 15) als Rastmittel ausgebildet sind, mit welchen die Gehäuse (11) der Reihenklemmen rastend an den Rändern der Öffnungen festgelegt sind,
**dadurch gekennzeichnet, dass**
g) sämtliche oder zumindest die Mehrzahl der Leiteranschlüsse von einer ersten Seite der Montageplatte (1) - einer Verdrahtungsseite - aus zugänglich und mit Leitern bestückbar sind, und
h) die Leiteranschlüsse (9) auf der Verdrahtungsseite der Montageplatte, vorzugsweise sämtliche Leiteranschlüsse (9) auf der Verdrahtungsseite, als Leiteranschlüsse (9) in Direktstecktechnik (Push-In-Anschlüsse), ausgebildet sind, und
i) dass diese Leiteranschlüsse (9) auf der Verdrahtungsseite der Montageplatte (1) an definierten Stellen eines räumlichen Rasters zugänglich sind.

2. Montageanordnung nach einem der vorstehenden Ansprüche, **dadurch gekennzeichnet, dass** die Leiteranschlüsse (9) auf der Verdrahtungsseite der Montageplatte (1) an definierten Stellen eines parallel zur Montageplatte in einer konstanten Höhe liegenden ebenen Rasters zugänglich sind.

3. Montageanordnung nach einem der vorstehenden Ansprüche, **dadurch gekennzeichnet, dass** auf der der Verdrahtungsseite gegenüber liegenden Seite der Montageplatte (1) - einer Bedien-, Anzeige-, Wartungs- und externen Anschlussseite - an dem Frontabschnitt (7) der elektrischen Geräte, insbesondere der Reihenklemmen, ferner Funktionsmittel wie wenigstens ein Markierer (19), wenigstens ein Querverbinder (21), wenigstens ein Leiteranschluss und/oder wenigstens ein Funktionsmodul angeordnet sind.

4. Montageanordnung nach einem der vorstehenden Ansprüche, **dadurch gekennzeichnet, dass** auf der Verdrahtungsseite der elektrischen Geräte, insbesondere der Reihenklemmen, ferner Funktionsmittel wie wenigstens ein Markierer (20) angeordnet sind.

5. Montageanordnung nach einem der vorstehenden Ansprüche, **dadurch gekennzeichnet, dass** sämtliche Leiteranschlüsse für interne Leiter eines ersten, vorzugsweise geringeren Querschnitts auf der Verdrahtungsseite der Montageplatte liegen und dass sämtliche Leiteranschlüsse für Leiter einer internen Verdrahtung für eine externe Verdrahtung auf der der Verdrahtungsseite gegenüber liegenden Seite der Montageplatte liegen bzw. zugänglich sind.

6. Montageanordnung nach einem der vorstehenden Ansprüche, **dadurch gekennzeichnet, dass** die Montagesockel derart ausgebildet sind, dass an ihnen auf einer Seite der Montageplatte (1) an einem Adapterteil oder einem Adapterprofil Geräte (4) angeordnet werden können und dass sie auf der Verdrahtungsseite wenigstens einen Leiteranschluss (9) aufweisen oder dass an sie auf der Verdrahtungsseite ein oder mehrere Anschlussteil(e) (27) mit einem oder mehreren Leiteranschlüssen (9) ansetzbar ist/sind.

7. Montageanordnung nach einem der vorstehenden Ansprüche, **dadurch gekennzeichnet, dass** der Montagesockel (5') Rastmittel (16, 17) an zwei voneinander abgewandten Außenseiten aufweist, die zum Verrasten in der Öffnung (2) an den Rändern der Öffnung (2) der Montageplatte (1) dienen.

8. Montageanordnung nach einem der vorstehenden Ansprüche, **dadurch gekennzeichnet, dass** der Montagesockel (5') ein als Profil (30) oder Steckgesicht ausgebildetes - einstückig mit ihm verbundenes oder separat ansetzbares - Adapterteil an seiner zur Öffnung weisenden Seite aufweist.

9. Montageanordnung nach einem der vorstehenden Ansprüche, **dadurch gekennzeichnet, dass** an der Montageplatte (1) und/oder den Geräten und/oder den Montagesockeln einer oder mehrere Referenzpunkte für eine Roboterausrichtung ausgebildet sind.

10. Elektrisches Gerät für eine Montageanordnung nach einem der Ansprüche 1 bis 13, **dadurch gekennzeichnet, dass** das Gerät als Reihenklemme oder als Elektronikgehäuse ausgebildet ist, die/das wenigstens zwei Leiteranschlüsse (9) an einer ersten Seite des Isolierstoffgehäuses aufweist, und Befestigungsmittel zum Befestigen des Gehäuses (11) an einer Montagewand (1) mit einer die Montagewand durchsetzenden Öffnung (2), wobei das Gehäuse dazu ausgelegt ist, im montierten Zustand die Montagewand zu durchsetzen und wobei vorzugsweise sämtliche Leiteranschlüsse für die interne Verdrahtung auf einer einzigen Seite der Montagewand angeordnet sind und/oder von dort zugänglich sind.

11. Schaltschrank mit einer Montageanordnung nach einem der vorstehenden Ansprüche und mit einem Schrankkorpus und einer Schranktür, **dadurch gekennzeichnet, dass** die Verdrahtungsseite der Montageplatte von der Tür abgewandt im Schaltschrank ausgerichtet ist.

12. Schaltschrank nach Anspruch 11, **dadurch gekennzeichnet, dass** die Montageplatte schwenkbar im Schaltschrank angeordnet ist oder dass die Montageplatte eine Schaltschrankwand ist.

## Claims

1. A mounting arrangement, in particular for a switch cabinet, having a one-part or multipart mounting plate (1) for receiving stackable electrical devices, in particular for receiving terminal blocks or electronics housings,
wherein
a) the mounting plate (1) has at least one or more openings (2) penetrating the mounting plate (1),
b) housings (11) of the electrical devices and/or of one or more mounting bases (5) penetrate the mounting plate,
c) the housing has at least one or more conductor connections (9) for connecting electrical conductors,
d) wherein the housings protrude with a front section (8) through the opening on the other side of the mounting plate (1),
e) the devices, preferably the terminal blocks, have fastening devices (14, 15), using which the devices, preferably the terminal blocks, are fixed on the mounting plates,
f) wherein the fastening devices (14, 15) are designed as latch means, using which the housings (11) of the terminal blocks are fixed in a latching manner on the edges of the openings,
**characterized in that**
g) all or at least the majority of the conductor connections are accessible and can be equipped with conductors from a first side of the mounting plate (1) - a wiring side - and
h) the conductor connections (9) on the wiring side of the mounting plate, preferably all conductor connections (9) on the wiring side, are designed as conductor connections (9) in direct plugging technology (push-in connections),
and
i) these conductor connections (9) are accessible on the wiring side of the mounting plate (1) at defined points of a spatial grid.

2. The mounting arrangement according to any one of the preceding claims, **characterized in that** the conductor connections (9) are accessible on the wiring side of the mounting plate (1) at defined points of a planar grid located in parallel to the mounting plate at a consistent height.

3. The mounting arrangement according to any one of the preceding claims, **characterized in that**, on the side of the mounting plate (1) opposite to the wiring side - an operating, display, maintenance, and external connection side - further functional means such as at least one marker (19), at least one cross connector (21), at least one conductor connection, and/or at least one functional module are arranged at the front section (7) of the electrical devices, in particular of the terminal blocks.

4. The mounting arrangement according to any one of the preceding claims, **characterized in that** further functional means, such as at least one marker (20), are arranged on the wiring side of the electrical devices, in particular of the terminal blocks.

5. The mounting arrangement according to any one of the preceding claims, **characterized in that** all conductor connections for internal conductors of a first, preferably smaller cross section are located on the wiring side of the mounting plate, and all conductor connections for conductors of an internal wiring for an external wiring are located or accessible on the side of the mounting plate opposite to the wiring side.

6. The mounting arrangement according to any one of the preceding claims, **characterized in that** the mounting bases are designed such that devices (4) can be arranged thereon on one side of the mounting plate (1) on an adapter part or an adapter profile, and they have at least one conductor connection (9) on the wiring side, or one or more connection part(s) (27) having one or more conductor connections (9) is/are attachable thereon on the wiring side.

7. The mounting arrangement according to any one of the preceding claims, **characterized in that** the mounting base (5') has latch means (16, 17) on two outer sides facing away from one another, which are used for the latching in the opening (2) at the edges of the opening (2) of the mounting plate (1).

8. The mounting arrangement according to any one of the preceding claims, **characterized in that** the mounting base (5') has an adapter part, which is designed as a profile (30) or plug face - and is integrally connected thereto or attachable separately - on its side facing toward the opening.

9. The mounting arrangement according to any one of the preceding claims, **characterized in that** one or more reference points for a robot alignment are formed on the mounting plate (1) and/or the devices and/or the mounting bases.

10. An electrical device for a mounting arrangement according to any one of claims 1 to 13, **characterized in that** the device is designed as a terminal block or as an electronics housing, which has at least two conductor connections (9) on a first side of the insulation material housing, and fastening means for fastening the housing (11) on a mounting wall (1) having an opening (2) which penetrates the mounting wall, wherein the housing is designed to penetrate the mounting wall in the mounted state, and wherein preferably all conductor connections for the internal wiring are arranged on a single side of the mounting wall and/or are accessible therefrom.

11. A switch cabinet having a mounting arrangement according to any one of the preceding claims and having a cabinet body and a cabinet door, **characterized in that** the wiring side of the mounting plate is aligned facing away from the door in the switch cabinet.

12. The switch cabinet according to claim 11, **characterized in that** the mounting plate is arranged pivotably in the switch cabinet, or the mounting plate is a switch cabinet wall.

## Revendications

1. Disposition de montage, en particulier pour une armoire électrique, avec une plaque de montage (1) en une ou plusieurs pièces destinée à recevoir des appareils électriques pouvant être montés en série, en particulier pour recevoir des bornes série ou des boîtiers électroniques, dans laquelle
a) la plaque de montage (1) présente au moins une ou plusieurs ouvertures (2) traversant la plaque de montage (1) ;
b) des boîtiers (11) des appareils électriques et/ou d'une ou plusieurs embases de montage (5) traversent la plaque de montage,
c) les boîtiers présentent au moins un ou plusieurs branchements de conducteurs (9) pour le branchement de conducteurs électriques,
d) les boîtiers dépassant à travers l'ouverture de l'autre côté de la plaque de montage (1) avec une partie de façade (8),
e) les appareils, de préférence les bornes en série, présentent des dispositifs de fixation (14, 15) avec lesquels les appareils, de préférence les bornes en série, sont fixés sur les plaques de montage,
f) les dispositifs de fixation (14, 15) étant conformés comme des moyens d'enclenchement avec lesquels les boîtiers (11) des bornes en série sont fixés par enclenchement sur les bords des ouvertures,
**caractérisée en ce que**
g) tous ou au moins la plupart des branchements de conducteurs sont accessibles et peuvent être équipés de conducteurs depuis un premier côté de la plaque de montage (1) ou côté de câblage et
h) les branchements de conducteurs (9) sur le côté de câblage de la plaque de montage, de préférence tous les branchements de conducteurs (9) sur le côté de câblage, sont réalisés comme des branchements de conducteurs (9) en connexion directe (branchements *push-in*), et
i) **en ce que** ces branchements de conducteurs (9) sont accessibles sur le côté de câblage de la plaque de montage (1) à des endroits définis d'une grille en trois dimensions.

2. Disposition de montage selon l'une des revendications précédentes, **caractérisée en ce que** les branchements de conducteurs (9) sur le côté de câblage de la plaque de montage (1) sont accessibles à des endroits définis d'une grille plane située à une hauteur constante parallèlement à la plaque de montage.

3. Disposition de montage selon l'une des revendications précédentes, **caractérisée en ce que** d'autres moyens de fonctionnement tels qu'au moins un marqueur (19), au moins un cavalier (21), au moins un branchement de conducteur et/ou au moins un module fonctionnel sont disposés sur le côté de la plaque de montage (1) opposé au côté de câblage, ou côté de commande, d'affichage, de maintenance et de branchement externe, sur la partie de façade (7) des appareils électriques, en particulier des bornes en série.

4. Disposition de montage selon l'une des revendications précédentes, **caractérisée en ce que** d'autres moyens fonctionnels tels qu'au moins un marqueur (20) sont disposés sur le côté de câblage des appareils électriques, en particulier des bornes en série.

5. Disposition de montage selon l'une des revendications précédentes, **caractérisée en ce que** tous les branchements de conducteurs pour les conducteurs internes d'une première section, de préférence réduite, se trouvent sur le côté de câblage de la plaque de montage et **en ce que** tous les branchements de conducteurs pour les conducteurs d'un câblage interne se trouvent ou sont accessibles sur le côté opposé au côté de câblage de la plaque de montage en vue d'un cablâge externe.

6. Disposition de montage selon l'une des revendications précédentes, **caractérisée en ce que** les embases de montage sont conformées de telle manière que des appareils (4) puissent être disposés dessus sur un côté de la plaque de montage (1) sur une pièce d'adaptation ou un profil d'adaptation et **en ce qu'**elles présentent sur le côté de câblage au moins un branchement de conducteur (9) ou **en ce qu'**une ou plusieurs parties de branchement (27) avec un ou plusieurs branchements de conducteurs (9) peuvent être posées dessus sur le côté de câblage.

7. Disposition de montage selon l'une des revendications précédentes, **caractérisée en ce que** l'embase de montage (5') présente des moyens d'enclenchement (16, 17) sur deux côtés tournés à l'opposé l'un de l'autre, qui servent à l'enclenchement dans l'ouverture (2) sur les bords de l'ouverture (2) de la plaque de montage (1).

8. Disposition de montage selon l'une des revendications précédentes, **caractérisée en ce que** l'embase de montage (5') présente sur son côté tourné vers l'ouverture une pièce d'adaptation conformée comme un profilé (30) ou une interface de connecteur, reliée d'une pièce avec elle ou pouvant être posée séparément dessus.

9. Disposition de montage selon l'une des revendications précédentes, **caractérisée en ce que** sont formés sur la plaque de montage (1) et/ou les appareils et/ou les embases de montage un ou plusieurs points de référence pour une orientation par un robot.

10. Appareil électrique pour une disposition de montage selon l'une des revendications 1 à 13, **caractérisé en ce que** l'appareil est conformé comme une borne série ou un boîtier électronique qui présente au moins deux branchements de conducteurs (9) sur un premier côté du boîtier isolant et des moyens de fixation pour fixer le boîtier (11) sur une paroi de montage (1) avec une ouverture (2) traversant la paroi de montage, le boîtier étant conçu pour traverser la paroi de montage dans l'état monté et tous les branchements de conducteurs pour le câblage interne étant de préférence disposés sur un seul côté de la paroi de montage et/ou accessibles à partir de là.

11. Armoire électrique avec une disposition de montage selon l'une des revendications précédentes et avec un corps d'armoire et une porte d'armoire, **caractérisée en ce que** le côté de câblage de la plaque de montage est orienté à l'opposé de la porte dans l'armoire électrique.

12. Armoire électrique selon la revendication 11, **caractérisée en ce que** la plaque de montage est disposée de façon pivotante dans l'armoire électrique ou **en ce que** la plaque de montage est une paroi de l'armoire électrique.
